(19) Europäisches Patentamt
European Patent Office
Office européen des brevets

(11) **EP 2 631 450 B1**

(12) **EUROPEAN PATENT SPECIFICATION**

(45) Date of publication and mention
of the grant of the patent:
**25.03.2015 Bulletin 2015/13**

(51) Int Cl.:
**F02C 7/045** *(2006.01)* **F02K 1/82** *(2006.01)*

(21) Application number: **12195230.3**

(22) Date of filing: **03.12.2012**

(54) **Element for sound absorption in aircrafts nacelles.**

Geräuschminderungselement für Flugzeugtriebwerke.

Elément pour l'absorption acoustique dans une nacelle d'avion.

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.02.2012 IT TO20120108**

(43) Date of publication of application:
**28.08.2013 Bulletin 2013/35**

(60) Divisional application:
**15154124.0**

(73) Proprietor: **Alenia Aermacchi S.p.A.**
**21040 Venegono Superiore (VA) (IT)**

(72) Inventors:
• **Copiello, Diego**
**20040 Venegono Superiore VA (IT)**

• **Duccini, Gianni**
**55042 Forte dei Marmi (LU) (IT)**
• **Ferrante, Pier Giorgio**
**21100 Varese (IT)**
• **Gurioli, Alessandro**
**21047 Saronno VA (IT)**
• **Merlo, Emanuele**
**28041 Arona NO (IT)**
• **Roberto Pertile**
**21040 Venegono Superiore (IT)**

(74) Representative: **Vitillo, Giuseppe**
**Barzanò & Zanardo Milano S.p.A.**
**Corso Vittorio Emanuele II, 61**
**10128 Torino (IT)**

(56) References cited:
**DE-A1-102007 032 600** **US-A- 5 702 230**
**US-A1- 2009 025 393**

## Description

## Technical field

The present invention relates to an element for sound absorption, particularly intended to be mounted on aircraft components.

More specifically, the present invention relates to an element for sound absorption according to the preamble of the appended claim 1.

## Background art

In the aviation industry, elements for sound absorption (also referred to in this field as "soundproof panels") are known which are intended for installation on aircraft components, the function of which is to dampen the noise typically generated by an aircraft in operation.

In particular, the engines used in the aviation field generally consist of various parts or components that can significantly contribute to the generated noise in terms of both levels and frequencies, which must then be properly dampened. Therefore, one application of such elements for sound absorption concerns engine nacelles, for the purpose of reducing the sound generated by the various parts of the engine housed in the nacelle.

US 5 702 230 A discloses an actively controlled acoustic treatment panel for suppressing noise in a gas turbine engine nacelle including a backsheet formed by a planar matrix of adjacent individually controllable elements, where each of the controllable elements has a transducer and a honeycomb cell enclosing the transducer. A facesheet is also bonded to the controllable elements. A plurality of sensors are positioned within the acoustic treatment panel for sensing acoustic pressure of the noise propagated against the facesheet. A driver is provided for electrically driving each of the transducers to effect displacement thereof in a direction substantially perpendicular to the facesheet. Circuitry is also operatively connected to the pressure sensors and the driver for controlling velocity magnitude and phase of the transducers during displacement, wherein a resulting acoustic impedance at the facesheet achieves a desired acoustic impedance boundary condition at the nacelle. The transducer is further made up of an inner lamination layer, an outer lamination layer, and a piezoelectric membrane positioned between the inner and outer lamination layers, wherein a plurality of aligned openings are provided in the inner and outer lamination layers so that the piezoelectric membrane can be displaced either toward or away from the facesheet.

## Summary of the invention

It is one object of the present invention to provide an improved element for sound absorption which is reliable and ensures better noise dampening performance compared to the prior art, and which can be manufactured in a simple and economical manner.

According to the present invention, this and other objects are achieved through an element for sound absorption according to the appended claim 1.

It is understood that the appended claims are an integral part of the technical teachings provided in the present description of the invention.

## Brief description of the drawings

Further features and advantages of the present invention will become apparent from the following detailed description, which is supplied by way of non-limiting example with reference to the annexed drawings, wherein:

- Figure 1 is a longitudinal sectional view of an aircraft component, such as an engine nacelle, in which a plurality of elements for sound absorption have been mounted in accordance with a first embodiment of the present invention;
- Figure 2 is a schematic and partially exploded perspective view of one element for sound absorption as shown in Figure 1;
- Figure 3 is a sectional elevation view of the element for sound absorption of Figure 2;
- Figure 4 is an enlarged partial view obtained along the closed line IV of Figure 3;
- Figure 5 is a sectional elevation view of an element for sound absorption in accordance with a second embodiment of the present invention;
- Figure 6 is a partial enlarged view obtained along the closed line VI of Figure 5;
- Figure 7 is a view similar to that shown in Figure 3, but wherein the element for sound absorption is equipped with electroacoustic transducer means; and
- Figure 8 is a block diagram relating to an implementation variant which is applicable to an element for sound absorption made in accordance with the first or second embodiment of the present invention.

Of course, said drawings are not in scale, in that in the following detailed description they will only be used for illustrating the basic principles of the present invention.

## Detailed description of the invention

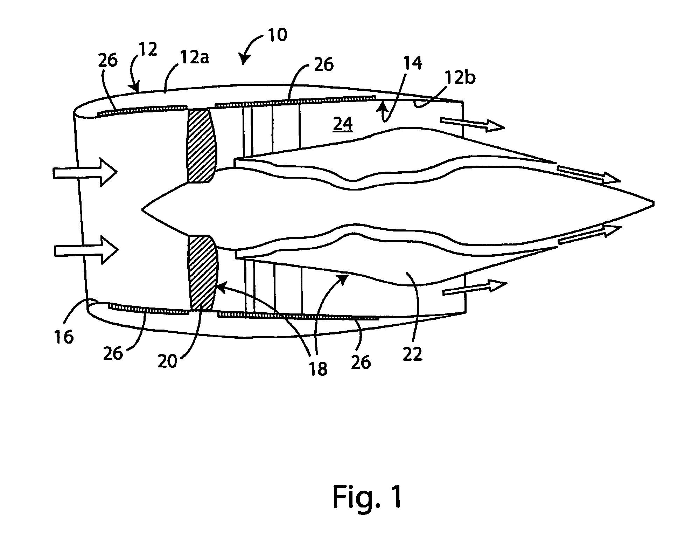

With reference to Figure 1, reference numeral 10 designates as a whole an aircraft component, e.g. an engine nacelle, for use in the aviation industry.

Engine nacelle 10 comprises a casing or cowling 12 having a substantially barrel-like shape and including a through cavity 14 extending in a substantially axial direction. Cowling 12 has an external peripheral surface (also known as "outer barrel") 12a facing outwards from nacelle 10 and an internal peripheral surface (also known as "inner barrel") 12b that surrounds through cavity 14. In addition, cowling 12 has an air intake 16, which is located at one end of through cavity 14 and has the function of conveying external air into the cowling.

Engine nacelle 10 further comprises a jet-type propulsion assembly 18 contained in cavity 14 and adapted to receive air from air intake 16 and accelerate it in order to generate a thrust. By way of non-limiting example, propulsion assembly 18 comprises a fan 20 and an engine 22, the former being housed upstream of the latter inside through cavity 14, thus creating a jet engine, e.g. of the turbofan type. Preferably, between cowling 12 and engine 22 a by-pass duct or annular region 24 is defined in through cavity 14 for conveying that air fraction coming from fan 20 which is not to flow through engine 22.

The structure and operation of a turbofan engine, like the one diagrammatically shown in Figure 1, are *per se* known in the industry, and for simplicity they will not be described in detail below. In said drawing, the air flows through the engine nacelle are shown, by way of example, by means of a series of arrows.

Nacelle 10 further comprises a plurality of elements for sound absorption (also known in the aviation industry as "soundproof panels"), indicated by 26 and designed in accordance with a first exemplary embodiment of the present invention. Elements 26 are mounted on the internal peripheral surface 12b, e.g. at an inlet region, comprised between air intake 16 and upstream of fan 20, and an outlet region, downstream of fan 20, where engine 22 is mounted. In the illustrated embodiment, elements 26 form the very internal peripheral surface 12b. For example, a single element 26 forms an inlet ring, which constitutes internal peripheral surface 12b in said inlet region; another single element 26 forms an outlet ring, which constitutes internal peripheral surface 12b in said outlet region.

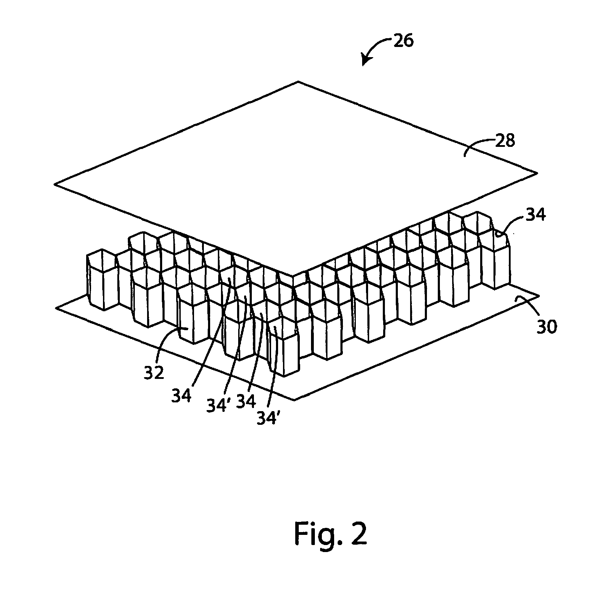

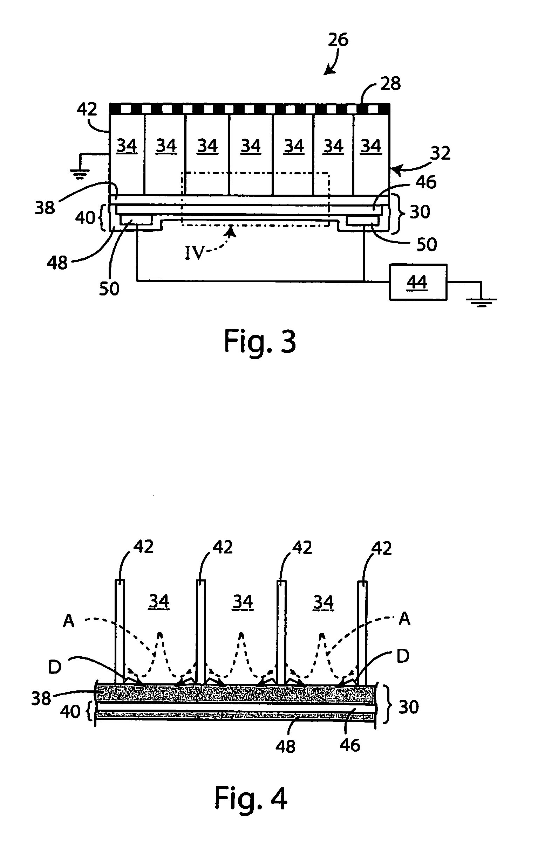

With reference to Figures 2 and 3, there is schematically shown the structure of an element 26 according to said first embodiment. Element 26 is provided for dampening sound and noise generated during the operation of propulsion assembly 18 of nacelle 10.

Element 26 comprises, in a known manner, a load-bearing front layer (or "face-sheet") 28 and a load-bearing back layer (or "back-sheet") 30. An intermediate honeycomb layer 32 is "sandwiched" between front layer 28 and the back layer. Said layers 28, 30, 32 are coupled together; in the embodiment shown herein, they are coupled together by co-curing said layers during an autoclave forming process.

Front layer 28 is, at least partly, substantially acoustically permeable or crossable, i.e. it can be passed through by a prevalent portion of the sound waves that hit it from the outside. Front layer 28 may be made of a composite material, e.g. reinforced with carbon or glass fiber layers.

Preferably, front layer 28 is porous; in particular, it has a plurality of apertures (not numbered), through which the sound waves can penetrate into honeycomb layer 32.

Preferably, front layer 28 is subjected to a drilling process for the purpose of creating said apertures. In the embodiment shown herein, the process for drilling front layer 28 is carried out after the autoclave forming of element 26.

Back layer 30 is substantially sound-reflecting, i.e. it can reflect or anyway deviate a prevalent portion of the sound waves that hit it. Preferably, back layer 30 comprises a multilayer rolled section.

As clearly visible in Figure 3, honeycomb layer 32 defines a mesh structure that has a plurality of hollow cells 34 laterally bordering on one another. The mutually opposite open axial ends of said cells 34 are covered by load-bearing layers 28, 30. Preferably, cells 34 extend in a direction substantially orthogonal to load-bearing layers 28, 30. Preferably, cross-section of the cells 34 is shaped substantially like a regular or irregular polygon (e.g. an hexagon), thus forming a substantially honeycomb-like arrangement.

Cells 34 have the function of resonating, in the cavity defined within their side walls, the sound waves entering through load-bearing front layer 28 and being diverted or reflected by load-bearing back layer 30. In this manner, the noise is attenuated through an at least partial absorption of the sound waves produced by propulsion assembly 18 through honeycomb layer 32.

Element 26 also includes a plasma actuator, e. g. of the type operating at atmospheric pressure, which is provided for inducing in cells 34 a flow of ionized air particles A interacting with the sound waves coming from front layer 28, thus ensuring a sound dampening effect. As will become apparent below, it is conceivable that said flow of ionized air particles A is only generated in some of cells 34.

Preferably, the plasma actuator is of the dielectric barrier discharge type, also commonly referred to with the acronym DBD.

Preferably, the plasma actuator is provided for conveying the fluid flow from back layer 30 towards the front layer 28. More preferably, the plasma actuator is provided to convey the fluid flow in a direction substantially perpendicular to back layer 30.

Preferably, the plasma actuator is arranged between back layer 30 and intermediate honeycomb layer 32.

Preferably, the plasma actuator comprises a first conductive electrode region 40, a dielectric material layer 38 coating first electrode region 40, and a second conductive electrode region 42 exposed to air. With particular reference to Figure 4, when at least one of the electrode regions 40, 42 is powered by a suitable electric power source 44, in each one of cells 34 facing electrode regions 40, 42 a plurality of cold plasma discharges D are generated, the progress of which is schematically shown by a continuous line. Cold plasma discharges D extend between electrode regions 40, 42. As a consequence, these cold plasma discharges D induce a flow of ionized air particles A, the trend of which is schematically shown by a dashed line, in cells 34.

Preferably, dielectric layer 38 is made of electrically insulating composite material, e.g. a fiberglass-reinforced rolled section.

Electrode regions 40, 42 are intended to be powered by electric power source 44, typically a high-voltage one, which supplies alternating-current (AC) voltage, direct-current (DC) voltage, or a combination of alternating and direct current. Preferably, the power voltage is of the periodic type.

Preferably, first electrode region 40 is comprised in back layer 30.

In the embodiment shown herein, first electrode region 40 comprises a conductive portion 46, which is provided for being electrically connected to electric power source 44, and a dielectric portion 48, which coats conductive portion 46 from opposite band with respect to dielectric layer 38. Preferably, conductive portion 46 overlaps dielectric layer 38, bordering on it. Advantageously but not necessarily, conductive portion 46 comprises a rolled layer made from conductive composite material, e.g. reinforced with carbon fiber, and/or dielectric portion 48 comprises a rolled layer made from non-conductive composite material, e.g. reinforced with glass fiber. In the embodiment shown herein, conductive portion 46 is buried in dielectric portion 48.

Preferably, the first electrode region 40 comprises electric connection means 50 that electrically connect the first electrode region 40 to electric power source 44. More preferably, the electric connection means comprise one or more terminal connection elements 50 applied to conductive portion 36 and buried in dielectric portion 48. In the embodiment shown herein, each one of the terminal connection elements comprises a metallic mesh 50.

In this embodiment, honeycomb layer 32 comprises - and preferably makes up - the second electrode region 42. For example, the second electrode region 42 is made of electrically conductive material, e.g. metal, preferably aluminium.

According to this embodiment, the first electrode region 40 is connected to electric power source 44, whereas the second electrode region 42 is grounded. In addition, electric power source 44 is connected to the first electrode region through one electrode, and is connected to ground through the other electrode.

If electric power source 44 supplies alternating current, the voltage is preferably high (e.g. of the order of ten kV) and is periodic with a relatively low frequency (e.g. at least 1 kHz). If electric power source 44 supplies direct current, the voltage preferably has a pulsed (e.g. square) waveform with a very high frequency, e.g. of the order of nanoseconds). Still in the case of direct-current supply, in order to move the ionized particles produced and to obtain the desired air flow in the electrode region, a pulsed (e.g. square) waveform with a (positive or negative) bias is preferably used. In this manner, when the impulsive phase of the direct-current voltage ends, electrode region 40 connected to the source will not have a null electric potential; on the contrary, between electrode regions 40 and 42 there will still be a potential difference, thus originating a residual electric field that will move the ionized air particles as indicated by dashed line A. In any case, the voltage and frequency of the electric power source are selected in such a way as to obtain a modulation of the flow of ionized air particles A which is compatible with the frequency band of the sound waves to be attenuated through elements 26.

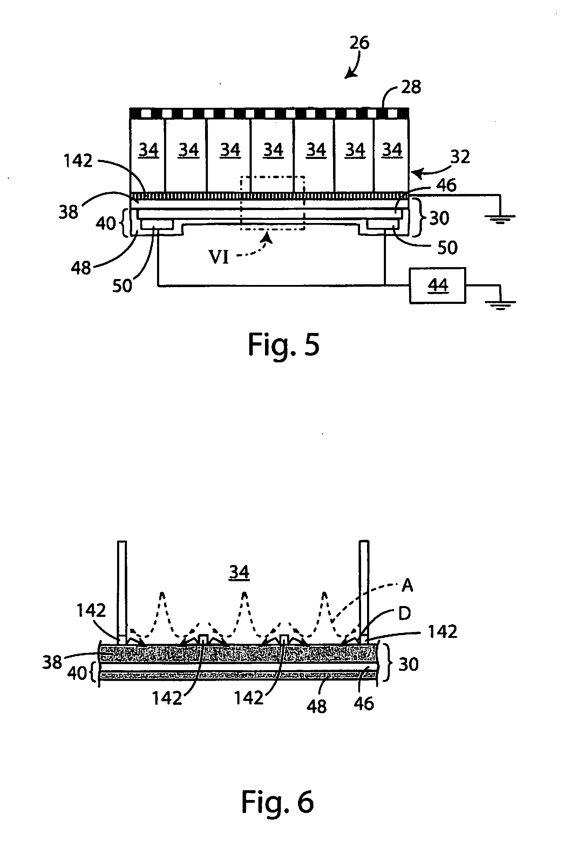

With reference to Figures 5 and 6, reference numeral 126 designates as a whole an element for sound absorption made in accordance with a second exemplary embodiment of the present invention.

Those parts or elements which are similar to or which perform the same function as those of the above-described embodiment have been assigned the same reference numerals. For simplicity, the description of such parts or elements will not be repeated below, and reference will be made to the above description of the first embodiment.

Element 126 for sound absorption comprises a second electrode region 142 which is designed in a different manner compared to the one illustrated in the first embodiment. The second conductive electrode region 142 is interposed between intermediate honeycomb layer 32 and back layer 30. In this case, intermediate honeycomb layer 32 is made of electrically non-conductive material.

Preferably, the second electrode region comprises a thin-mesh net of conductive material 142. In the embodiment shown herein, said net 142 is located on top of dielectric layer 38. In this manner, it is possible to generate in each cell 34 a plurality of flows of ionized air particles, each one of said flows advantageously extending from each mesh of conductive net 142.

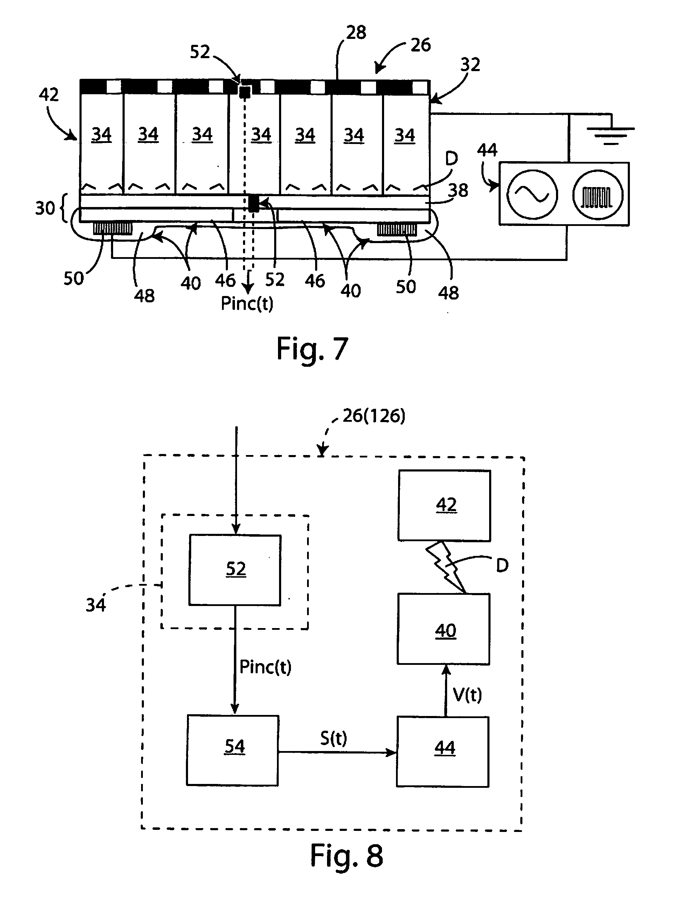

With reference to Figure 7, there is shown a further implementation variant of element 26. In this variant, element 26 comprises transducer means 52 provided to output an electric signal $P_{inc}(t)$, which is representative of the acoustic properties taken over time by the sound waves incident on element 26, e.g. representative of the acoustic pressure associated with said sound waves. As will be apparent to the man skilled in the art, such a variant is also applicable to element 126 designed in accordance with the second embodiment of the invention.

Preferably, transducer means 52 comprise at least one electroacoustic transducer (e.g. a microphone), preferably facing a cell 34 of intermediate layer 32.

One or more of said transducers 52 may be integrated into front layer 28, so as to detect the acoustic properties of the sound waves entering through said front layer 28, and/or into intermediate layer 32, so as to detect the properties of the sound waves passing along the side walls of cells 34, and/or into back layer 30, so as to detect the properties of the sound waves coming near said back layer 30.

By way of example, the following will describe a few preferred configurations of transducer means 52 in element 26, 126:

- an electroacoustic transducer is located at front layer 28 and faces a cell 34 in which the plasma actuator cannot generate the plasma discharge;
- an electroacoustic transducer is located at front layer 28 and faces a cell 34 in which the plasma actuator can generate the plasma discharge;
- an electroacoustic transducer is located at back layer 30 and faces a cell 34 in which the plasma actuator cannot generate the plasma discharge;
- an electroacoustic transducer is located at intermediate layer 32 (preferably on the side walls of one of cells 34) and faces a cell 34 in which the plasma actuator cannot generate the plasma discharge;
- an electroacoustic transducer is located at front layer 28 and another electroacoustic transducer is located at back layer 30, wherein at least the other transducer faces a cell 34 in which the plasma actuator cannot generate the plasma discharge (preferably both electroacoustic transducers face same cell 34); and
- an electroacoustic transducer is located at front layer 28 and another electroacoustic transducer is located at intermediate layer 32 (preferably on the side walls of one of cells 34), wherein at least the other transducer faces a cell 34 in which the plasma actuator cannot generate the plasma discharge (preferably both electroacoustic transducers face same cell 34).

In order to prevent the plasma actuator from generating a plasma discharge D in one or more predetermined cells 34, in particular to avoid any interference in the cells where transducer means 52 are located, an interruption may be provided in the conductive portions of at least one of electrode regions 40, 42 associated with those cells.

As shown by way of example in Figure 7, in the first embodiment described above the electrode region may be provided in the form of a pair of conductive portions 40 separated by a non-conductive median section, thereby preventing the generation of plasma in cells 34 correspondingly located in the median position and equipped with transducer means 52. As an alternative, it is conceivable to divide the electrode region into a plurality of conductive portions separated from one another by a respective plurality of interruptions, thus creating a plurality of groups of cells in which the plasma actuator is not adapted to generate plasma discharge D and which may possibly be equipped with transducer means. Of course, other solutions similar to the above may also be conceived for element 126 made in accordance with the second embodiment as previously illustrated.

According to a further implementation variant, element 26, 126 comprises a control unit 54 designed to control the plasma actuator based on the electric signal

$P_{inc}(t)$ supplied by transducer means 52. In this manner, the plasma actuator can adjust the flow of ionized air particles A in accordance with the detected characteristics of the actually incident sound waves, so as to improve the sound absorption performance of element 26, 126. Preferably, control unit 54 is provided to output an electric control signal S(t) to electric power source 44, which in turn is designed to supply an electric voltage V(t), determined as a function of said control signal S(t), to the electrode regions 40, 42.

For example, control unit 54 acts as an automatic control system, which is preferably managed like a feedback controller based on said electric signal $P_{inc}(t)$ supplied by acoustic transducer means 52.

Advantageously, the electric control signal supplied by control unit 54 to electric power source 44 is as follows:

$$S(t) = S_{gen}(t) + S_{mod}(t)$$

where:

- $S_{gen}(t)$ represents the plasma generation signal, and
- $S_{mod}(t)$ represents the plasma generation modulating signal, which is processed as a function of signal $P_{inc}(t)$ transmitted by the electroacoustic transducer means.

In particular, $S_{gen}(t)$ contributes to defining the voltage and frequency of the plasma generation signal, whereas $S_{mod}(t)$ contributes to defining the frequency, duty cycle and phase of the modulation signal.

Of course, without prejudice to the principle of the invention, the forms of embodiment and the implementation details may be extensively varied from those described and illustrated herein by way of non-limiting example, without however departing from the scope of the invention as set out in the appended claims.

**Claims**

1. Element (26; 126) for sound absorption intended to be mounted on aircraft components, such as nacelles (10); said element (26; 126) comprising:

   - a front layer (28) having at least one sound-permeable region;
   - a back layer (30) which is sound-reflecting; and
   - a honeycomb layer (32) sandwiched between said front layer (28) and said back layer (30), and defining a meshed structure having a plurality of hollow cells (34) laterally bordering on one another; said cells being provided to resonate within their side walls the sound waves entering through said front layer (28) and being diverted by said back layer (30);

said element being **characterized in that** it further comprises a plasma actuator (38, 40, 42, 44; 38, 40, 142, 44) provided for generating, in at least one of said cells (34), at least one plasma discharge (D) inducing a flow of ionized air particles (A) interacting with the sound waves coming from said front layer (28).

2. Element (26; 126) according to claim 1, wherein said plasma actuator (38, 40, 42, 44; 38, 40, 142, 44) is provided for conveying said flow of ionized air particles (A) from said back layer (30) towards said front layer (28).

3. Element (26; 126) according to claim 2, wherein said plasma actuator (38, 40, 42, 44; 38, 40, 142, 44) is provided for conveying said flow of ionized air particles (A) in a direction substantially perpendicular to said back layer (30).

4. Element (26; 126) according to any one of the preceding claims, wherein said plasma actuator (38, 40, 42, 44; 38, 40, 142, 44) is of the dielectric barrier discharge or DBD type.

5. Element (26; 126) according to claim 4, wherein said plasma actuator comprises a first conductive electrode region (40), a dielectric material layer (38) coating said first electrode region (40), and a second conductive electrode region (42; 142) exposed to air; at least one (40) of said electrode regions being provided to be powered by an electric power source (44), so as to generate said at least one plasma discharge (D).

6. Element (26; 126) according to claim 5, wherein said back layer (30) comprises said first electrode region (40).

7. Element (26; 126) according to claim 6, wherein said first electrode region (40) comprises a conductive portion (46), for example a rolled section made of conductive material, provided for being electrically connected to said electric power source (44), and a dielectric portion (48), for example a rolled section made of non-conductive material, coating said conductive portion (46) from opposite band with respect to the dielectric material layer (38).

8. Element (26) according to any one of claims 5 to 7, wherein said honeycomb layer (32) comprises - and preferably makes up - said second electrode region (42).

9. Element (26) according to claim 8, wherein said intermediate honeycomb layer (32) is made of conductive material, preferably aluminium.

10. Element (126) according to any one of claims 5 to 7, wherein said second electrode region (142) is located between said honeycomb layer (32) and said back layer (30).

11. Element (126) according to claim 10, wherein said second electrode region is a thin-mesh net (142) made of conductive material.

12. Element (26; 126) according to any one of the preceding claims, further comprising transducer means (52) provided for outputting an electric signal ($P_{inc}(t)$) representative of the acoustic properties of the sound waves incident on said element (26; 126).

13. Element according to claim 12, further comprising a control unit (54) designed to control said plasma actuator based on said electric signal ($P_{inc}(t)$).

14. Aircraft component, such as a nacelle (10), comprising an element (26; 126) provided for sound absorption according to any one of the preceding claims.

15. Aircraft comprising a component (10) according to claim 14.

**Patentansprüche**

1. Element (26; 126) zur Schallabsorption, das zur Anbringung an Flugzeugkomponenten, beispielsweise Triebwerksgondeln (10), bestimmt ist; wobei das Element (26; 126) aufweist:

   - eine Frontschicht (28) mit mindestens einem schalldurchlässigen Bereich;
   - eine Rückschicht (30), die schallreflektierend ist; und
   - eine Wabenschicht (32), die zwischen der Frontschicht (28) und der Rückschicht (30) eingelegt ist, und die eine maschige Struktur mit einer Vielzahl an hohlen Zellen (34) bildet, die seitlich aneinander angrenzen; wobei die Zellen vorgesehen sind, dass die Schallwellen, die durch die Frontschicht (28) eindringen und durch die Rückschicht (30) abgelenkt werden, innerhalb ihrer Seitenwände schwingen;

   **dadurch gekennzeichnet, dass** das Element weiterhin einen Plasmaaktuator (38, 40, 42, 44; 38, 40, 142, 44) aufweist, der vorgesehen ist, in mindestens einer der Zellen (34) zumindest eine Plasmaentladung (D) zu erzeugen, die einen Fluss von ionisierten Luftteilchen (A) hervorruft, der mit den von der Frontschicht (28) herkommenden Schallwellen interagiert.

2. Element (26; 126) nach Anspruch 1, wobei der Plasmaaktuator (38, 40, 42, 44; 38, 40, 142, 44) vorgesehen ist, den Fluss ionisierter Luftteilchen (A) von der Rückschicht (30) zu der Frontschicht (28) hin zu führen.

3. Element (26; 126) nach Anspruch 2, wobei der Plasmaaktuator (38, 40, 42, 44; 38, 40, 142, 44) vorgesehen ist, den Fluss ionisierter Luftteilchen (A) in eine Richtung zu führen, die im Wesentlichen rechtwinklig zur Rückschicht (30) ist.

4. Element (26; 126) nach einem der vorhergehenden Ansprüche, wobei der Plasmaaktuator (38, 40, 42, 44; 38, 40, 142, 44) vom dielektrischen Barriere Entladungs-, oder DBD Typ ist.

5. Element (26; 126) nach Anspruch 4, wobei der Plasmaaktuator einen ersten leitenden Elektrodenbereich (40), eine dielektrische Materialschicht (38), die den ersten Elektrodenbereich (40) umgibt, und einen zweiten leitenden Elektrodenbereich (40; 142) aufweist, der Luft ausgesetzt ist; wobei mindestens einer (40) der Elektrodenbereiche vorgesehen ist, mit einer elektrischen Energiequelle (44) betrieben zu sein, um die mindestens eine Plasmaentladung (D) zu erzeugen.

6. Element (26; 126) nach Anspruch 5, wobei die Rückschicht (30) den ersten Elektrodenbereich (40) aufweist.

7. Element (26; 126) nach Anspruch 6, wobei der erste Elektrodenbereich (40) einen leitenden Anteil (46), zum Beispiel einen eingerollten Abschnitt aus leitendem Material aufweist, der vorgesehen ist, elektrisch mit der Energiequelle (44) verbunden zu sein, und einen dielektrischen Anteil (48), zum Beispiel einen eingerollten Abschnitt aus nichtleitendem Material, der den leitenden Anteil (46) von der gegenüberliegenden Schichtseite mit Bezug auf die dielektrische Materialschicht (38) umgibt.

8. Element (26) nach einem der Ansprüche 5 bis 7, wobei die Wabenschicht (32) die zweite Elektrodenschicht (42) aufweist - und bevorzugt bildet.

9. Element (26) nach Anspruch 8, wobei die dazwischenliegende Wabenschicht (32) aus leitendem Material hergestellt ist, vorzugsweise Aluminium.

10. Element (126) nach einem der vorhergehenden Ansprüche 5 bis 7, wobei der zweite Elektrodenbereich (142) zwischen der Wabenschicht (32) und der Rückschicht (30) angeordnet ist.

11. Element (126) nach Anspruch 10, wobei der zweite Elektrodenbereich ein dünnmaschiges Netz (142) aus leitendem Material ist.

12. Element (26; 126) nach einem der vorhergehenden Ansprüche, weiterhin aufweisend eine Umwandlungsvorrichtung (52), die vorgesehen ist, ein elektrisches Signal ($P_{inc}(t)$) auszugeben, das repräsentativ für die akustischen Eigenschaften der auf das Element (26; 126) einfallenden Schallwellen ist.

13. Element nach Anspruch 12, weiterhin aufweisend eine Steuereinheit (54), die ausgeführt ist, den Plasmaaktuator basierend auf dem elektrischen Signal ($P_{inc}(t)$) anzusteuern.

14. Flugzeugkomponente, beispielsweise eine Triebwerksgondel (10), aufweisend ein Element (26; 126), das zur Schallabsorption nach einem der vorhergehenden Ansprüche vorgesehen ist.

15. Flugzeug, aufweisend eine Komponente (10) nach Anspruch 14.

**Revendications**

1. Elément (26 ; 126) d'absorption acoustique destiné à être monté sur des composants d'aéronef, tels que des nacelles (10) ; ledit élément (26; 126) comprenant :

   - une couche avant (28) comportant au moins une région perméable aux sons ;
   - une couche arrière (30) qui réfléchit les sons ; et
   - une couche en nid-d'abeilles (32) intercalée entre ladite couche avant (28) et ladite couche arrière (30), et définissant une structure maillée comportant une pluralité de cellules creuses (34) limitrophes les unes des autres latéralement ; lesdites cellules étant prévues pour faire résonner au sein de leurs parois latérales les ondes acoustiques pénétrant à travers ladite couche avant (28) et déviées par ladite couche arrière (30) ;

   ledit élément étant **caractérisé en ce qu'**il comprend en outre un actionneur plasma (38, 40, 42, 44 ; 38, 40, 142, 44) prévu pour générer, dans au moins l'une desdites cellules (34), au moins une décharge plasma (D) induisant un flux de particules d'air ionisées (A) interagissant avec les ondes acoustiques provenant de ladite couche avant (28).

2. Elément (26 ; 126) selon la revendication 1, dans lequel ledit actionneur plasma (38, 40, 42, 44 ; 38, 40, 142, 44) est prévu pour acheminer ledit flux de particules d'air ionisées (A) depuis ladite couche arrière (30) vers ladite couche avant (28).

**3.** Elément (26; 126) selon la revendication 2, dans lequel ledit actionneur plasma (38, 40, 42, 44 ; 38, 40, 142, 44) est prévu pour acheminer ledit flux de particules d'air ionisées (A) dans une direction sensiblement perpendiculaire à ladite couche arrière (30).

**4.** Elément (26 ; 126) selon l'une quelconque des revendications précédentes, dans lequel ledit actionneur plasma (38, 40, 42, 44 ; 38, 40, 142, 44) est du type à décharge à barrière diélectrique ou DBD.

**5.** Elément (26 ; 126) selon la revendication 4, dans lequel ledit actionneur plasma comprend une première région d'électrode conductrice (40), une couche de matériau diélectrique (38) revêtant ladite première région d'électrode (40), et une seconde région d'électrode conductrice (42 ; 142) exposée à l'air ; au moins l'une (40) desdites régions d'électrode étant prévue pour être alimentée par une source d'alimentation électrique (44), de façon à générer ladite au moins une décharge plasma (D).

**6.** Elément (26 ; 126) selon la revendication 5, dans lequel ladite couche arrière (30) comprend ladite première région d'électrode (40).

**7.** Elément (26 ; 126) selon la revendication 6, dans lequel ladite première région d'électrode (40) comprend une portion conductrice (46), par exemple une section laminée réalisée en matériau conducteur, prévue pour être raccordée électriquement à ladite source d'alimentation électrique (44), et une portion diélectrique (48), par exemple une section laminée réalisée en matériau non conducteur, revêtant ladite portion conductrice (46) de bande opposée par rapport à la couche de matériau diélectrique (38).

**8.** Elément (26) selon l'une quelconque des revendications 5 à 7, dans lequel ladite couche en nid-d'abeilles (32) comprend - et de préférence constitue - ladite seconde région d'électrode (42).

**9.** Elément (26) selon la revendication 8, dans lequel ladite couche en nid-d'abeilles (32) intermédiaire est réalisée en matériau conducteur, de préférence en aluminium.

**10.** Elément (126) selon l'une quelconque des revendications 5 à 7, dans lequel ladite seconde région d'électrode (142) est située entre ladite couche en nid-d'abeilles (32) et ladite couche arrière (30).

**11.** Elément (126) selon la revendication 10, dans lequel ladite seconde région d'électrode est un filet à mailles fines (142) réalisé en matériau conducteur.

**12.** Elément (26 ; 126) selon l'une quelconque des revendications précédentes, comprenant en outre un moyen de transducteur (52) prévu pour produire en sortie un signal électrique ($P_{inc}(t)$) représentant les propriétés acoustiques des ondes acoustiques incidentes sur ledit élément (26 ; 126).

**13.** Elément selon la revendication 12, comprenant en outre une unité de commande (54) conçue pour commander ledit actionneur plasma d'après ledit signal électrique ($P_{inc}(t)$).

**14.** Composant d'aéronef, tel qu'une nacelle (10), comprenant un élément (26 ; 126) prévu pour l'absorption acoustique selon l'une quelconque des revendications précédentes.

**15.** Aéronef comprenant un composant (10) selon la revendication 14.

Fig. 1

Fig. 2

Fig. 3

Fig. 4

Fig. 5

Fig. 6

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5702230 A